Europäisches Patentamt

(19) European Patent Office

Office européen des brevets

(11) Publication number: **0 055 371**
**B1**

(12) **EUROPEAN PATENT SPECIFICATION**

(45) Date of publication of patent specification: **28.01.87**

(51) Int. Cl.⁴: **G 21 F 1/00, C 22 C 1/00**

(21) Application number: **81109014.1**

(22) Date of filing: **27.10.81**

(54) Neutron absorber, neutron absorber assembly utilizing the same, and other uses thereof.

(30) Priority: **27.12.80 JP 185099/80**
**27.12.80 JP 185100/80**

(43) Date of publication of application:
**07.07.82 Bulletin 82/27**

(45) Publication of the grant of the patent:
**28.01.87 Bulletin 87/05**

(84) Designated Contracting States:
**DE FR GB SE**

(56) References cited:
**FR-A-1 547 084**
**FR-A-1 574 399**
**FR-A-2 301 605**
**FR-A-2 317 370**
**FR-A-2 423 548**
**US-A-3 280 330**
**US-A-3 856 513**

**JOURNAL OF METALS, vol. 31, no. 12,
December 1979. New York (US). "Refractory
Metal Glasses Invented at Allied Chemical",
page 6**

(73) Proprietor: **Kabushiki Kaisha Toshiba
72, Horikawa-cho Saiwai-ku
Kawasaki-shi Kanagawa-ken 210 (JP)**

(72) Inventor: **Inomata, Koichiro
34-40, Umgegaoka Midori-ku
Yokohama-shi Kanagawa-ken (JP)**
Inventor: **Aisaka, Tatsuyoshi
878-1, Kawaraguchi
Ebina-shi Kanagawa-ken (JP)**
Inventor: **Yoshino, Hisashi
24-39, Umegaoka Midori-ku
Yokohama-shi Kanagawa-ken (JP)**
Inventor: **Higashinakagawa, Emiko
1-12-6, Goshozuka Takatsu-ku
Kawasaki-shi Kanagawa-ken (JP)**
Inventor: **Sakuranaga, Tomonobu
1-17-502, Azumacho
Atsugi-shi Kanagawa-ken (JP)**
Inventor: **Kuwae, Ryosho
Kirigaoka Green Town 19-404 1-1, Kirigaoka
6-chome
Midori-ku Yokohama-shi Kanagawa-ken (JP)**
Inventor: **Sato, Kanemitsu
256-6, Sanmaicho Kanagawa-ku
Yokohama-shi Kanagawa-ken (JP)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

(58) References cited:
**JOURNAL OF APPLIED PHYSICS, vol. 50, no. 10, October 1979, American Institute of Physics (US). K. H. J. BUSCHOW et al.: "Formation, decomposition, and electrical transport properties of amorphous Hf-Ni and Hf-Co alloys", pages 6348-6352**

(74) Representative: **Hansen, Bernd, Dr.rer.nat. et al Hoffmann, Eitle & Partner Patentanwälte Arabellastrasse 4 D-8000 München 81 (DE)**

## Description

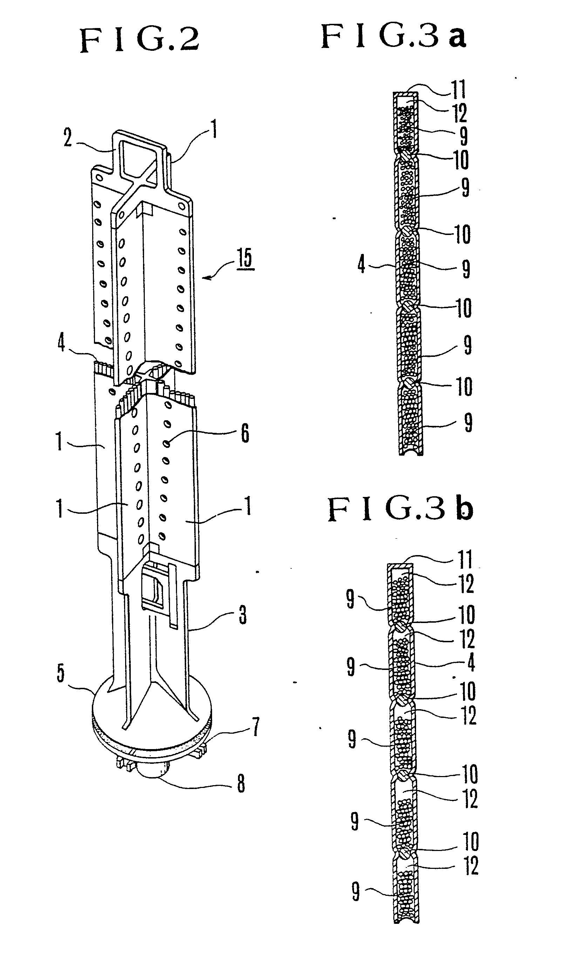

It is well known that boron carbide ($B_4C$) is used as, for example, the conventional neutron absorber for a water cooled type nuclear reactor. This boron carbide is in a powder form and accordingly, it is usual that the boron carbide is packed in a sealed container with a density of about 70%. This sealed container is formed of an elongated tube made of stainless steel, which is commonly referred to as a "poison tube", and boron carbide is packed therein. The tube has a substantially cylindrical shape in a longitudinal cross section as shown in Figs. 2 and 3a referred to later, and a neutron absorber powder 9 composed of boron carbide having an average particle size of about 100 microns is packed and sealed therein. This neutron absorber powder 9 is packed with a density of about 70%, as mentioned above, and the likelihood of movement of the powder in the cylinder is small. However, in order to prevent the movement more efficiently, ball-shaped movement preventative members 10 for the neutron absorber are secured at various intermediate portions of the poison tube and the wall of the poison tube is partially deformed.

Further, since the boron carbide is in a powder form, it is necessary to completely seal said poison tube at its end with a sealing member 11 in order to prevent the boron carbide powder from scattering.

However, when the control rod is driven, the neutron absorber powder 9 thus sealed in starts to move in the poison tube and tends to gather in the vicinity above each movement preventive member 10 thus leaving a space 12, as shown in Fig. 3b. In an extreme case, there will be no neutron absorber below the neutron absorber movement preventive member 10, and the neutron absorbing effectiveness at such a portion will be lost and the neutron absorbing efficiency becomes uneven, thus giving rise to a deterioration of the neutron control characteristic.

Further, although boron carbide as the above mentioned neutron absorber is advantageous as an absorber when used for a control rod of nuclear reactor since it has a large cross sectional area for absorbing neutrons, its (n, α) reaction with neutrons, i.e. $5B^{10} + 0n^1 = 3Li^7 + 2He^4$, is an exothermic reaction, and due to the temperature rise by the exothermic reaction and the generation of helium gas, the boron carbide will be swelled and tends to cause the above-mentioned undesirable movement of powder or to raise the inner pressure of the tube, and in some cases, it is possible to cause a destruction of the tube. Accordingly, the poison tube with the above-mentioned neutron absorber 9, has a disadvantage that its life is short. Further, the poison tube has additional drawbacks that its construction is complicated through being composed of the tube body, the neutron absorber powder and the movement preventive members, and that it is necessary to pack the powder in the tube body, and further that it is necessary to insert and secure the movement preventive members by means such as clamping, this leading to an inefficient operability.

Under these circumstances, there has been a development in which neutron absorber elements are formed of boron containing stainless steel by dissolving or precipitating the above-mentioned boron in a stainless steel and such neutron absorbing elements are assembled into a control rod (Japanese Patent Publication No. 43998/1977 and Japanese Provisional Patent Publication No. 93287/1978). However, in this case, it is practically impossible to incorporate sufficient amounts of boron into the stainless steel, and in addition, a welding means is required for forming a control rod to have a cross shape in a transverse sectional view, and at the welded portion, helium tends to collect at the crystal grain boundary to cause intergranular fracture. The boron content in the stainless steel is at best at a level of about 3%, and accordingly no adequate neutron absorbing efficiency is obtainable. In addition, the present inventors have had an idea to prepare an iron (Fe), nickel (Ni) or iron-nickel alloy incorporated with predetermined amount of at least one of substances such as boron having a large macroscopic thermal neutron-absorption cross section, and to employ it as a neutron absorber.

However, it is extremely difficult to alloy the metals having a large neutron-absorption cross section in their normal condition. Accordingly, attention has been drawn to an amorphous alloy which has become popular recently.

There have been several reports on the amorphous alloy, for example, in Japanese Provisional Patent Publication No. 78705/1976, United States Patent No. 3,856,513, and Journal of Nuclear Materials 92 (1980) 366—377, which, however, each refer only to the resistance to radiation damage and disclose no teaching as to the present inventor's discovery that the amorphous alloy has neutron absorbing ability.

An object of the present invention is to provide a neutron absorber assembly for a control rod, which has a minimum change with time lapses in the neutron absorbing effectiveness due to an undesirable transfer of the neutron absorbing substances during the use, which is light in weight so that the control rod is readily operable, wherein the formation of crystal grain boundaries of e.g. boron is prevented and abnormal generation of helium resulting from these grain boundaries is thereby eliminated.

Accordingly, the present invention provides a neutron absorber assembly comprising a neutron absorber element comprising a neutron absorber of amorphous alloy containing at least one of iron, nickel and iron-nickel alloy and a neutron absorbing substance and a supporting means for supporting and including one or more of the neutron absorber element; characterized in that said neutron absorber element is formed in a ribbon-shaped foil, and said neutron absorbing substance is boron present in an amount of 5 to 30% by atomic ratio, and said amorphous alloy further comprises 0.1 to 15% by atomic ratio of at least one heat stabilizing substance selected from the group of phosphorous, carbon, silicon, aluminium, antimony, germanium, tin and beryllium. If the amount of boron exceeds 30%, by atomic ratio it is difficult by the present level of technology to obtain an amorphous thin sheet having a good mechanical property and having boron uniformly distributed therein.

In addition to the above boron, having been adjusted to a content of not less than 5% by atomic ratio, from 0.1 to 15% by atomic ratio of substance(s) selected from the group consisting of phosphorous (P), carbon (C), silicon (Si), aluminium (Al), antimony (Sb), tin (Sn), germanium (Ge) and beryllium (Be) are added as a heat stabilizing substance, which is a third component. By adding at least one of these substances in an amount within the above range, the crystallizing temperature can be higher to enhance the stability and thus the amorphous state can be maintained for a long period of time.

Further, 1 to 20% by atomic ratio of chromium (Cr) may be added as a fourth component. This fourth component can improve the corrosion resistance, and makes an application under a severe condition practicable. The reason for restricting the amount of chromium to not more than 20% is that there is a problem in the technique for the production of an amorphous alloy, and if the amount exceeds this level, the amorphous substance can hardly be alloyed. If the amount is less than 1%, the corrosion resistance will be little improved.

As a fifth component, 0.1 to 10% by atomic ratio of at least one of samarium (Sm), gadolinium (Gd), europium (Eu), erbium (Er), dysprosium (Dy), rhodium (Rh), rhenium (Re), iridium (Ir), gold (Au) and silver (Ag) may be further added, thereby further increasing the neutron absorbing efficiency. However, if the amount exceeds 10%, it is difficult to obtain a uniform amorphous thin plate because of the difficulties in the production of the same. If it is less than 0.1%, the neutron absorbing efficiency will be little improved.

By further adding substance(s) selected from lithium (Li), cadmium (Cd), indium (In) and mercury (Hg) as a sixth component, the neutron absorbing property can be improved. However, the amount must be 0.1 to 5% by atomic ratio. If the amount is less than 0.1%, neutron absorbing efficiency will be little improved, and if it exceeds 5%, it becomes difficult to prepare desired foil-like product. The above substances may be added singly or in an optional combination of the four different kinds, in either case of which a similar property can be obtained.

The above lithium, cadmium, indium and mercury are the substances having a good neutron absorbing ability, respectively, and accordingly, the neutron absorbing efficiency can be increased by their incorporation into said neutron absorber.

Further, as a seventh component, 1 to 15% by atomic ratio of hafnium (Hf) may be added to the above. The reason for the addition is that hafnium is also a substance having a good neutron absorbing ability and a further improvement in the effect is expected by its addition.

The total amounts of the above-mentioned third to seventh components should not exceed 50%, within which range, however, the intended objects of the present invention can be accomplished by any combination. If the total amounts of the substances of the above third to seventh components exceed 50% by atomic ratio, it is difficult to obtain a uniform thin plate in an industrial scale by the presently available technology, even if they are amorphous.

The neutron absorber of amorphous alloy may otherwise comprise iron, nickel or an iron-nickel alloy which is the first component and Hf, added thereto in an amount of 8 to 85% by atomic ratio. Since Hf is a substance having a good neutron absorbing ability and it is readily alloyed with the first component, it is easy to prepare a uniform amorphous alloy in the form of a thin sheet or a foil having a good mechanical property.

The neutron absorber of amorphous alloy may still otherwise comprise 0.1 to 10% of the second component B, 1 to 20% of the fourth component Cr, and 0.1 to 3% of at least one of the fifth components Sm, Gd, Eu, Er, Dy, Rh, Re, Ir, Ag and Au (the amounts are by atomic ratios, respectively), the rest being the first component iron, nickel or an iron-nickel alloy. However, the total amounts of the second, fourth and fifth components must not exceed 30% by atomic ratio.

The second and fifth components are substances having a good neutron absorbing ability and the upper limits of their amounts are the maximum amounts under which they can exist in an amorphous alloy. The fourth component is added for the purpose of improving the corrosion resistance, and the upper limit of its amount is the maximum amount under which it can exist in an amorphous state.

The neutron absorber of amorphous alloy may still otherwise comprise iron, nickel or an iron-nickel alloy and at least one of rare earth elements Sm, Gd, Er, Eu and Dy added in an amount of 40 to 70% by atomic ratio.

The rare earth elements, Sm, Gd, Er, Eu and Dy are all elements having a good neutron absorbing ability, and the upper limit of their amounts is the maximum value under which they can exist in an amorphous state and their lower limit is the minimum value.

The neutron absorber of amorphous alloy may still otherwise comprise the first component Ni, Fe or Ni-Fe alloy, and the second component B added thereto in an amount of 0.1 to 10%, the fourth component Cr in an amount of 1 to 20% and at least one of Rh, Re, Ir, Ag and Au which are part of the fifth component in an amount of 0.1 to 10%, all by atomic ratio. In this case, it is necessary to take care that the total amounts of the second, fourth and fifth components must not exceed 40% by atomic ratio.

The fourth component is added for the purpose of improving the corrosion resistance, and the fifth component is added as a substance having a good neutron absorbing ability. The respective upper limits are the maximum amounts for addition under which they can stably exist in an amorphous state.

It has been confirmed that in each of the above cases, the neutron absorber of the present invention shows wholly uniform neutron absorbing efficiency, that a foil-like ribbon- or belt-shaped absorber makes it practicable to obtain a light weight product and causes no undesirable movement of the neutron absorbing substance, and that the production is facilitated since the neutron absorbing substance can be uniformly distributed simply by producing an amorphous alloy. The neutron absorbing substance in an amorphous state can be incorporated in an amount as much as some ten times as compared in the case of crystalline state. Although there is an upper limit thereto, it is a characterizing feature of the present invention that a large amount of neutron absorbing substance as uncomparable with the conventional absorber can be distributed by incorporating other substances to further enhance the neutron absorbing ability.

The present invention will be described in detail with reference to the accompanying drawings. The drawings include views showing supplemental explanation, a prior art and several embodiments of the invention, in which:

Fig. 1a and Fig. 1b are partial schematic views showing examples of the apparatus for preparing the neutron absorber used in the present invention;

Fig. 2 is a partially cutaway perspective view illustrating the inside of a conventional control rod;

Fig. 3a is an enlarged longitudinal sectional view illustrating a part of a conventional poison tube;

Fig. 3b is a longitudinal sectional view showing the state of the movement of the neutron absorber in the poison tube of Fig. 3a;

Figs. 4a to 4d and Fig. 5 are partially cutaway perspective views illustrating embodiments of the neutron absorber assembly utilizing the neutron absorber according to the present invention;

Fig. 6 is a plan view illustrating another embodiment of the neutron absorber assembly according to the present invention;

Fig. 7 and Fig. 8 are perspective views illustrating neutron absorber rods employing the neutron absorber according to the present invention; and

Fig. 9 is a partial cutaway view illustrating a control rod in which a neutron absorber assembly of the present invention is employed.

Now, the present invention will be described with reference to the following Examples:

### Example 1

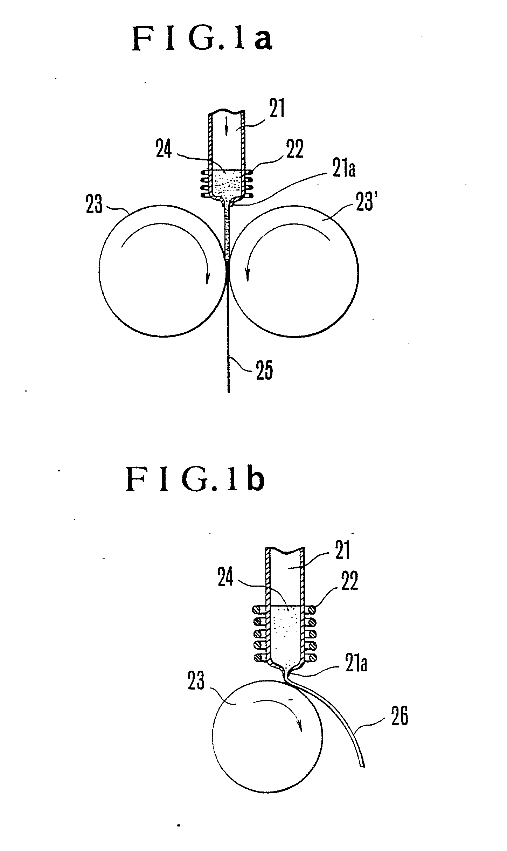

Added to the first component iron (Fe) was 10% by atomic ratio of the second component boron (B) as a substance having a large neutron-absorption cross section. By the use of a device as shown in Fig. 1a, the mixture was heated and melted in a quartz container 21 by a heating means 22. The molten alloy 24 was inserted between a pair of rolling rollers 23, 23' rotating at a high speed (2000 rpm) and immediately cooled to form a ribbon-like neutron absorber 25 of amorphous alloy having a thickness of about 40 µm and a width of about 10 mm.

This neutron absorber 25 of amorphous alloy had a uniform distribution of boron throughout the entire product, and the absorption of neutrons was uniform and it had an adequate absorbing efficiency.

### Example 2

Mixed were 80% by atomic ratio of the seventh component hafnium (Hf) as a substance having a large neutron-absorption cross section, 15% by atomic ratio of the first component nickel (Ni) and 5% by atomic ratio of the fourth component chromium (Cr). By the use of the device as shown in Fig. 1a, the mixture was heated and melted at 1250°C, in the quartz container 21 by the heating means 22. The molten alloy was extruded from a nozzle 21a having a diameter of 0.4 mm under a pressure of 0.2 atm., and then inserted between rolling rollers 23, 23' having a diameter of 200 mm and rotating at a high speed of 2000 rpm and immediately cooled to form a ribbon-shaped neutron absorber 25 of amorphous alloy having a width of 3 mm and the thickness of 40 µm.

This neutron absorber 25 had a crystallization temperature of 480°C and thus was found to be sufficiently durable in the nuclear reactor when used for a neutron absorber rod.

### Example 3

Added to the first component iron (Fe) was 10% by atomic ratio of the second component boron (B) as a substance having a large neutron-absorption cross section. By the use of a device as shown in Fig. 1b, the mixture was heated and melted in a quartz container 21 by a heating means 22. The molten alloy 24 was projected through a nozzle 21a on a roller 23 rotating at a high speed of 2000 rpm and immediately cooled to form a ribbon-shaped neutron absorber 26 of amorphous alloy having a thickness of about 40 µm and a width of about 100 mm.

This neutron absorber 26 of amorphous alloy had a uniform distribution of boron throughout the entire product, and the absorption of neutron was uniform and it had an adequate neutron absorbing efficiency.

### Example 4

Mixed were 80% by atomic ratio of the seventh component hafnium (Hf) as a substance having a large neutron-absorption cross section, 15% by atomic ratio of the first component nickel (Ni) and 5% by atomic ratio of the fourth component chromium (Cr). By the use of the device as shown in Fig. 1b, the mixture was heated and melted at 1250°C in the quartz container 21 by the heating means 22. The molten alloy was projected through the nozzle 21a on a roller having a diameter of 200 mm and rotating at a high speed of 2000 rpm, and immediately cooled to form a ribbon-shaped neutron absorber 26 of amorphous alloy having a width of 30 mm and the thickness of 40 μm.

This neutron absorber 26 had a crystallization temperature of 480°C and thus was found to be sufficiently durable in the nuclear reactor when used as a neutron absorber.

### Example 5

An alloy composed of 40% by atomic ratio of samarium (Sm) as a neutron absorbing substance, 40% of nickel (Ni) and 20% of iron (Fe), was formed into an amorphous alloy and shaped into a neutron absorber in a manner similar to Example 4.

Samarium had a large neutron-absorption cross section, and such samarium was uniformly distributed in the neutron absorber. Accordingly, when used in the control rod for a nuclear reactor, the neutron absorber exhibited a good neutron absorbing efficiency, and there was no undesirable movement of the neutron absorbing substance when reacted with neutrons, thus providing a feature that the life is long.

### Example 6

An alloy composed in atomic ratios of 5% of boron (B) as a neutron absorbing substance, 3% of gadolinium (Gd), 10% of chromium (Cr), 5% of cadmium (Cd), 5% of gold (Au) and 15% of hafnium (Hf), the rest being iron, was formed into an amorphous alloy and shaped to a neutron absorber under the same conditions as in Example 4. Gd and Hf have extremely large neutron-absorption cross section and the neutron absorber thus obtained exhibited a sufficient neutron absorbing efficiency, thereby providing a feature that the life is prolonged to a greater extent.

### Example 7

In atomic ratios, 10% of boron (B), 15% of chromium (Cr) and 3% of dysprosium (Dy), the rest being iron (Fe), were formed into an amorphous alloy and shaped into a neutron absorber of amorphous alloy in a manner similar to Example 4. In this case, there is a feature that the absorption of neutrons can be carried out with a good corrosion resistance due to the action of chromium.

### Example 8

An alloy composed in atomic ratios of 5% of boron (B), 10% of chromium (Cr), 10% of europium (Eu), 5% of rhenium (Re) and 20% of nickel (Ni), the rest being iron (Fe), was formed into an amorphous alloy and shaped into a neutron absorber of amorphous alloy in the like manner as in Example 4. Results similar to the above were also obtained.

### Example 9

An alloy composed in atomic ratios of 20% of boron (B), 10% of phosphorus (P) and 40% of nickel (Ni), the rest being iron, was formed into an amorphous alloy and shaped into a neutron absorber of amorphous alloy in a manner similar to the above. This also had a heat stability and a sufficient neutron absorbing efficiency.

### Example 10

An alloy composed in atomic ratios of 5% of boron (B), 2% of aluminum (Al), 5% of chromium (Cr), 10% of gadolinium (Ga), 2% of indium (In), 3% of hafnium (Hf), 15% of nickel (Ni), and 5% of silver (Ag), the rest being iron, was formed into an amorphous alloy and shaped into a neutron absorber of amorphous alloy in a manner similar to the above. This contained the neutron absorbing substances as much as 20% and had a high neutron absorbing efficiency as well as the heat stability due to aluminum and the corrosion resistance due to chromium. Thus, this is a neutron absorber having a superior stability.

### Example 11

An alloy composed in atomic ratios of 85% of hafnium (Hf), and 10% of nickel (Ni), the rest being iron (Fe), was formed into an amorphous alloy and shaped into a neutron absorber of amorphous alloy in a manner similar to the above. This showed a sufficient neutron absorbing efficiency although its effectiveness was inferior to the one obtained in Example 10.

As apparent from the foregoing descriptions, the neutron absorber of the present invention is formed from an amorphous alloy in which the substances having large neutron-absorption cross section can adequately be alloyed, and thus a neutron absorber having a high neutron absorbing efficiency can be obtained by utilizing the property of the amorphous alloy. Namely, by adding them in an amorphous state, it has been accomplished for the first time to raise the mixing ratios of metals having large neutron-absorption cross section, which are hardly alloyed by the conventional methods, to a level which has been unable to attain in a crystalline state. Moreover, the neutron absorber according to the present invention can be in the form of a foil having a thickness of rom 20 to 80 μm, which has a good mechanical strength and a good processability, whereby the product can be formed into any desired shape. Further, the above-mentioned neutron absorbing substances are evenly distributed in the amorphous alloy, and accordingly the neutron absorbing efficiency is uniformly distributed. Besides, they are not movable by the reaction with neutrons and the desired effectiveness can be maintained for a long period of time. Thus, it has been made possible to prolong the effective life.

The neutron absorber according to the present invention can be utilized as follows:

Firstly, it can be used as a neutron absorber for a control rod by constructing a neutron absorber assembly utilizing the neutron absorber of the invention.

A control rod for a water cooling type nuclear reactor is designed to absorb excess neutrons in the nuclear reactor thereby to control the chain reaction of nuclear fission. This control rod is placed between fuel assemblies of the nuclear reactor, and mounted to be movable in the longitudinal direction (the up-and-down direction) of the reactor.

As shown in Fig. 2, this control rod comprises blades 1, in a shape of a cross when viewed from above, a suspension handle 2 secured to the above blades 1 at the upper portion of the Figure, and a support leg 3. A velocity limiter 5 is formed on a lower part of the support leg 3 so that, in emergency, the transfer (downwardly) of the control rod may be made slowly. Reference numeral 6 designates heat dissipation holes, and the numeral 7 designates a guide roller for the up-and-down transfer of the control rod. Numeral 8 designates a coupling socket for connection to the control rod driving mechanism. The blade 1 is made to have a hollow structure, and in the case of conventional control rod, a plurality of poison tubes 4 are placed therein along each surface of the blade. This poison tube 4 is formed of a stainless steel to have a substantially cylindrical shape in a longitudinal cross section and boron carbide ($B_4C$) having a particle size of 100 μm (average particle size) as a neutron absorbing substance 9 is packed and sealed therein, as shown in Fig. 3a, and as also explained already in the introductory part of this specification. The various problems in the conventional control rod for nuclear reactor have been also discussed therein.

Those problems can be solved by employing the neutron absorber of the present invention as a neutron absorber element for constituting a neutron absorber assembly for control rod, which is to be replaced by the conventional poison tube.

The neutron absorber assembly according to the present invention will be described below in further detail with reference to the drawings:

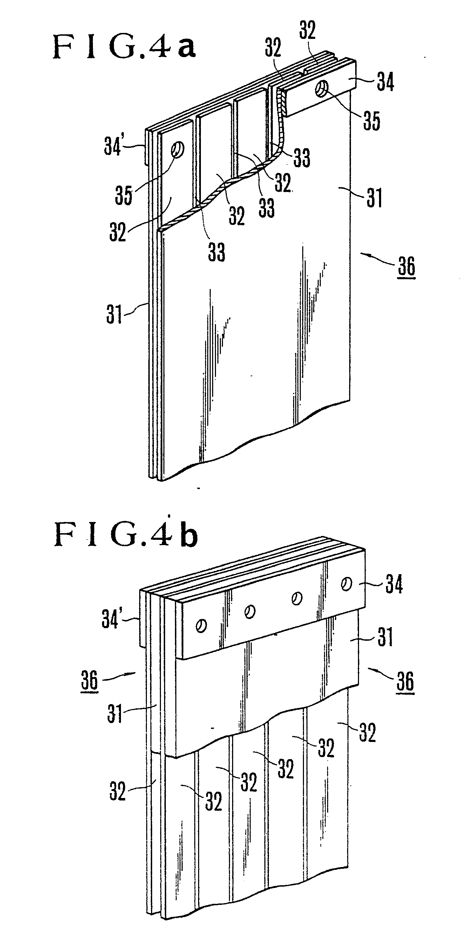

Fig. 4a shows a typical embodiment of the neutron absorber assembly according to the present invention, in which reference numeral 31 designates support plate composed of a pair of stainless steel plates having a predetermined size, and neutron absorber elements 32 of amorphous alloy composed of a stainless steel incorporated with about 20% by atomic ratio of boron (in addition to boron, the above mentioned gadolinium etc. may be added), and sandwiched in between. The neutron absorber elements 32 are in the form of a thin belt having a thickness of about 30 μm and a width of about 200 mm and, in the embodiment of Fig. 4a, they are arranged side by side with a little distance 33 from one another on the plate surface of the support plate 31. This distance 33 is designed not to substantially contribute to a failure of absorption of neutrons. However, such distance 33 may not necessarily be provided. The elements 32 may be arranged to have no such distance 33, or a sheet of neutron absorber element having a greater width may instead be employed, or, as mentioned later, the respective absorber elements may be arranged overlapping each other.

A pair of fixing frames 34, 34' are provided along the surface of the support plates 31 and at the ends thereof, and they are integrally secured by screws (not shown) inserted to the holes 35 to form a neutron absorber assembly 36.

The above mentioned neutron absorber assembly 36 comprises extremely thin neutron absorber elements 32 of amorphous alloy having a thickness of 30 μm and a width of 200 mm arranged in a predetermined manner, and the support plate 31 supporting them, and accordingly it is made to have a quite light weight. When it is mounted on a control rod, the control rod can be made to have an extremely light weight and to be readily operated.

Since the neutron absorber elements 32 are made of an amorphous alloy containing boron and they contain sufficient amounts of boron as a neutron absorbing substance, they are capable of efficiently absorbing excess neutrons. As totally different from the one packed in the conventional poison tube, the boron contained in the amorphous alloy is alloyed, and therefore, there is little movement of boron. Thus, there is no possibility of leading to an unbalance in the neutron absorbing efficiency and there is little change in the efficiency as time lapses.

According to the embodiment shown in Fig. 4a, the neutron absorber elements 32 containing boron are arranged in parallel relation to one another in a single layer, but a plurality of neutron absorber elements may be laminated/overlapped alternately together with support plates 31 as shown in Fig. 4b. The neutron absorber elements 32 of the present invention may otherwise be arranged overlapping each other in a zig zag fashion as shown in Fig. 4c and supported by a pair of the support plates 31 (not shown in Fig. 4c). Since the elements 32 are thin, there is an advantage that they can optionally be laminated and there is no substantial influence over the weight of the neutron absorber assembly 36, even in such case.

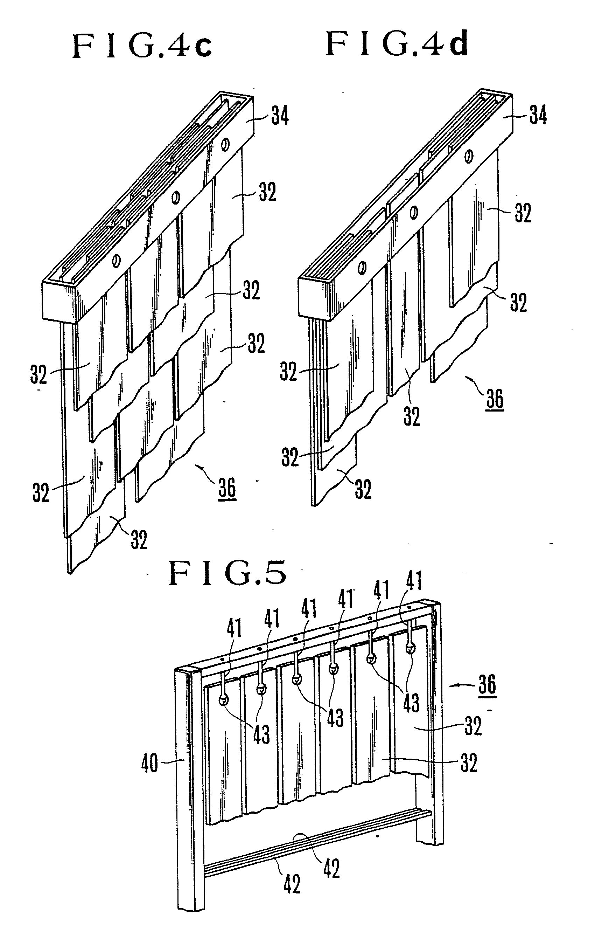

The lamination or overlap of the neutron absorber elements 32 may further be modified to partially change the neutron absorption density within the neutron absorber assembly 36. Modification of the lamination can easily be done according to the intended application, for example as shown in Fig. 4d, so as to be thick at the edge portions and thin at the middle portion of the neutron absorber assembly 36. (Support plates 31 are not shown also in Fig. 4d.) Furthermore, in place of such arrangement, neutron absorber elements having a different degree of neutron absorbing ability may be combined.

The above neutron absorber assembly 36 has a simple construction and the assembling operation thereof is also simple, whereby the operating efficiency is considerably improved, because basically it is required only to arrange the neutron absorber elements 32 in a desired fashion between a pair of stainless steel support plates 31, and to secure them with the fixing frames 34. Since the above-mentioned neutron absorber elements 32 are made of an amorphous alloy and have a proper resiliency, they are suitable for being arranged overlapping one another.

Fig. 5 is another embodiment of the neutron absorber assembly of the present invention, in which U-shaped suspenders 41 are secured in a predetermined distance from one another on a part (the upper part) of a stainless steel frame 40 (which may be formed integrally). Ribbon-shaped neutron absorber elements 32 having the same structure as mentioned above and having suspension holes 43 are suspended in parallel with one another on the frame 40 through the suspension holes 43. In the Figure, the elements are secured at their one ends only. However, to prevent the movement, it is preferred to suspendedly secure both ends of the elements 32. Further, if the neutron absorber elements 32 are long, reinforcing members 42, 42 may be provided at an intermediate position thereby to clamp the elements to prevent their movement.

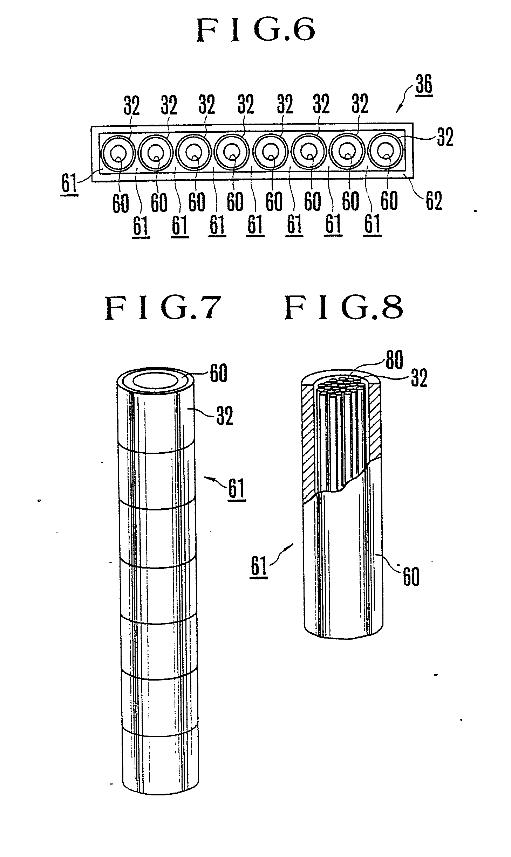

Fig. 6 illustrates a still further embodiment of the neutron absorber assembly 36 of the present invention, in which neutron absorber elements 32 made of an amorphous alloy, are provided on the periphery of holders 60 made of a stainless steel tube. The neutron absorber elements 32 are formed as shown in Fig. 7, in which a ribbon-shaped neutron absorber element 32 is wound helically on the periphery of the stainless steel holder 60 to form a neutron absorber rod 61. The element can be supported by a band (not shown) at each end. The neutron absorber rods thus formed are arranged in the same plane and accommodated in a rectangular support 62 to form a neutron absorber assembly 36. Further, the securing of said neutron absorber units 61 to the support 62 should desirably be made by a mechanical fastening means (such as bolt fastening) without using welding means. The above-mentioned holder 60 may be a solid rod.

The neutron absorber assembly 36 thus formed has holders 60 made of a stainless steel tube, and therefore it is possible to supply cooling water through the tube so that the cooling efficiency can be improved.

Fig. 8 is a modification of the neutron absorber rod 61 shown in Fig. 7. A number of neutron absorber elements 32 are inserted and secured in the holder 60 of stainless steel tube. The neutron absorber elements 32 are made of an amorphous alloy in a form of an elongated thin rod having a diameter of about 100 μm, and they are inserted in an axial hole 80 and secured therein mechanically, to form a neutron absorber rod 61. The neutron absorber rod thus formed are mounted in the support 62 in the same manner as shown in Fig. 6 to form a neutron absorber assembly 36. In this case, the fixing of the holder 60 of a stainless steel tube with the neutron absorber elements can simply be done by adequately packing the elements 32 into the holder 60, and thus, the fixing becomes quite easy. Although thin rod-shaped elements are illustrated in Fig. 8, narrow strip-shaped elements may be inserted instead, or the wider ribbon- or belt-shaped elements being wound longitudinally to form a rod which is volute in a cross section, may be inserted.

The above-mentioned neutron absorber elements 32 are likely to crystalize and become brittle if heated by e.g. welding, and therefore, it is necessary to avoid heating them at a temperature of more than 500°C.

Even when the neutron absorber elements 32 of amorphous alloy are used for a control rod, the temperature is controlled at a level of less than 300°C so that the absorber elements will not be subjected to a temperature above 500°C at which they are crystallized, and there will be no possibility that the neutron absorber elements become brittle.

As described in the foregoing, the neutron absorber assembly 36 of the present invention is advantageous in that it is simple in construction, has a good operability, and therefore is suitable for mass and economical production, that the employment of the neutron absorber elements 32 in which the neutron absorbing substance is uniformly distributed and which has a uniform neutron absorbing ability brings good neutron absorbing efficiency, and causes no substantial change of the neutron absorbing ability as time lapses, and further than when the neutron absorber elements 32 made of extremely thin (about from 20 to 80 μm) and light materials are assembled to form a control rod, the control rod thus prepared can be readily operated.

Further, since the material is not in a crystalline form as used to be, there is no accumulation of helium at the grain boundary, and accordingly, there is little possibility of intergranular fracture, whereby a control rod superior in safety is obtainable.

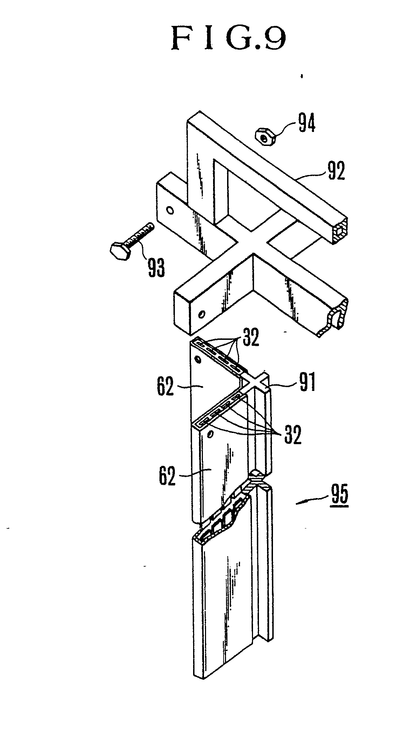

Fig. 9 illustrates an application of the neutron absorber assembly 61 of the present invention to a neutron control rod. Four neutron absorber elements 32 are arranged in a plane and mounted on a stainless steel support plates 62. The support plate 62 is secured at its one end portion to a cross member 91 of the control rod, to form an overall structure of a cross. In the illustrated embodiment, only a part is shown and other parts are omitted. Further, an upper part thereof is inserted in a suspension handle 92 and secured by a bolt 93 and a nut 94 to form a complete control rod. Further, the lower part of the control rod 95 is secured to a known coupling socket.

The control rod thus prepared has the neutron absorber elements 32 containing efficiently and evenly distributed neutron absorbing substance, and the neutron absorber elements 32 is an amorphous alloy wherein an adequate amount of neutron absorbing substance is contained and the substance undergoes no undesirable movement during use, and accordingly there will be no change with time lapse in the neutron absorbing efficiency. Further, the above-mentioned neutron absorber elements 32 are in a form of a foil having a thickness of from 20 to 80 µm, and they are light in weight, and accordingly, the control rod incorporated with such elements is also light in weight, whereby the driving mechanism of the control rod can be simplified and made compact with no necessity of providing the velocity limiter.

**Claims**

1. A neutron absorber assembly comprising: a neutron absorber element comprising a neutron absorber of amorphous alloy containing at least one of iron, nickel and iron-nickel alloy and a neutron absorbing substance

and a supporting means for supporting and including one or more of the neutron absorber element;

characterized in that said neutron absorber element is formed in a ribbon-shaped foil, and said neutron absorbing substance is boron present in an amount of 5 to 30% by atomic ratio, and said amorphous alloy further comprises 0.1 to 15% by atomic ratio of at least one heat stabilizing substance selected from the group consisting of phosphorus, carbon, silicon, aluminum, antimony, germanium, tin and beryllium.

2. The neutron absorber assembly as claimed in Claim 1, characterized in that said neutron absorbing substance further comprises (a) 0.1 to 10% by atomic ratio of at least one selected from the group consisting of samarium, gadolinium, europium, erbium, dysprosium, rhodium, rhenium, iridium, gold and silver, (b) 0.1 to 5% by atomic ratio of at least one selected from the group consisting of lithium, cadmium, indium and mercury, and (c) 1 to 15% by atomic ratio of hafnium; and said amorphous alloy further comprises as a corrosion inhibiting substance (d) 1 to 20% by atomic ratio of chromium; total of the atomic ratios of components (a), (b), (c), (d) and said heat stabilizing substance being not more than 50%.

3. A neutron absorber assembly comprising: a neutron absorber element comprising a neutron absorber of amorphous alloy containing at least one of iron, nickel and iron-nickel alloy and neutron absorbing substance, and a supporting means for supporting and including one or more of the neutron absorber element; characterized in that said neutron absorber element is formed in a ribbon-shaped foil, and said neutron absorbing substance comprises (a) 0.1 to 10% by atomic ratio of boron and (b) 0.1 to 3% by atomic ratio of at least one selected from the group consisting of samarium, gadolinium, europium, erbium, dysprosium, rhodium, rhenium, iridium, gold and silver; and said amorphous alloy further comprises as a corrosion inhibiting substance (c) 1 to 20% by atomic ratio of chromium; the total of the atomic ratios of the components (a), (b) and (c) being not more than 30%.

4. A neutron absorber assembly comprising: a neutron absorber element comprising a neutron absorber of amorphous alloy containing at least one of iron, nickel and iron-nickel alloy and neutron absorbing substance, and a supporting means for supporting and including one or more of the neutron absorber element; characterized in that said neutron absorber element is formed in a ribbon-shaped foil, and said neutron absorbing substance comprises (a) 0.1 to 10% by atomic ratio of boron and (b) 0.1 to 10% by atomic ratio of at least one selected from the group consisting of rhenium, rhodium, iridium, gold and silver; and said amorphous alloy further comprises as a corrosion inhibiting substance (c) 1 to 20% by atomic ratio of chromium; the total of the atomic ratios of the components (a), (b) and (c) being not more than 40%.

5. A neutron absorber assembly comprising: a neutron absorber element comprising a neutron absorber of amorphous alloy containing at least one of iron, nickel and iron-nickel alloy and neutron absorbing substance, and a supporting means for supporting and including one or more of the neutron absorber element; characterized in that said neutron absorber element is formed in a ribbon-shaped foil, and said neutron absorbing substance is hafnium present in an amount of 8 to 85% by atomic ratio.

6. A neutron absorber assembly comprising: a neutron absorber element comprising a neutron absorber of amorphous alloy containing at least one of iron, nickel and iron-nickel alloy and neutron absorbing substance, and a supporting means for supporting and including one or more of the neutron absorber element; characterized in that said neutron absorber element is formed in a ribbon-shaped foil, and said neutron absorbing substance is at least one selected from the group consisting of samarium, gadolinium, europium, erbium and dysprosium present in an amount of 40 to 70% by atomic ratio.

7. The neutron absorber assembly as claimed in any one of Claims 1 to 6, characterized in that said neutron absorber element is in a plural number and arranged in a same plane with a support plate of said supporting means.

8. The neutron absorber assembly as claimed in claim 7, characterized in that said plural number of the neutron absorber elements is arranged overlapping one another and supported by said supporting means.

9. The neutron absorber assembly as claimed in claim 8, characterized in that the overlap of said neutron absorber elements formed in a ribbon-shaped foil is modified to partially change the neutron absorption density in the neutron absorber assembly.

10. The neutron absorber assembly as claimed in any one of claims 1 to 6, characterized in that a plural number of the neutron absorber elements is suspended and secured in parallel with one another on a support frame.

11. The neutron absorber assembly as claimed in any one of claims 1 to 6, characterized in that said neutron absorber element is kept by a tubular holder to form a neutron absorber rod, which is further supported by the supporting means.

12. The neutron absorber assembly as claimed in claim 11, characterized in that said neutron absorber rod comprises the neutron absorber element formed in a ribbon-shaped foil, and wound helically and secured on the periphery of the tubular holder.

13. The neutron absorber assembly as claimed in claim 11, characterized in that said neutron absorber rod comprises the neutron absorber element formed in an elongated thin rod, and inserted and secured in the axial hole of the tubular holder.

14. The neutron absorber assembly as claimed in claim 11, characterized in that said neutron absorber rod comprises the neutron absorber element formed in a foil inserted in the axial hole of the tubular holder.

**Patentansprüche**

1. Eine Neutronabsorberanordnung, umfassend: ein Neutronenabsorberelement, umfassend einen Neutronenabsorber aus einer amorphen Legierung, die wenigstens eines von Eisen, Nickel und einer Eisen-Nickel-Legierung und eine neutronenabsorbierende Substanz enthält und eine Trägereinrichtung zum Tragen und einschliessend eine oder mehrere der Neutronenabsorptionselemente, dadurch gekennzeichnet, dass das Neutronenabsorptionselement als eine bandartige Folie ausgebildet ist und die neutronenabsorbierende Substanz Bor ist, welches in einem Atomverhältnis in einer Menge von 5 bis 30 % vorliegt, und dass die amorphe Legierung weiterhin 0,1 bis 15 %, als Atomverhältnis, wenigstens einer hitzestabilisierenden Substanz, ausgewählt aus der Gruppe, bestehend aus Phosphor, Kohlenstoff, Silicium, Aluminium, Antimon, Germanium, Zinn und Beryllium, umfasst.

2. Neutronenabsorptionsanordnung gemäss Anspruch 1, dadurch gekennzeichnet, dass die neutronenabsorbierende Substanz weiterhin enthält: (a) 0,1 bis 10 % als Atomverhältnis, von wenigstens einem, ausgewählt ausgewählt aus der Gruppe, bestehend aus Samarium, Gadolinium, Europium, Erbium, Dysprosium, Rhodium, Rhenium, Iridium, Gold und Silber, (b) 0,1 bis 5 %, ausgedrückt durch das Atomverhältnis, von wenigstens einem, ausgewählt aus der Gruppe, bestehend aus Lithium, Cadmium, Indium und Quecksilber, und (c) 1 bis 15 %, ausgedrückt als Atomverhältnis, von Hafnium; und dass die amorphe Legierung weiterhin als korrosionsinhibierende Substanz (d) 1 bis 20 %, ausgedrückt als das Atomverhältnis, von Chrom enthält, wobei die Gesamtmenge der Atomverhältnisse der Komponenten (a), (b), (c) und (d) und der wärmestabilisierenden Substanz nicht mehr als 50 % beträgt.

3. Neutronenabsorptionsanordnung, umfassend: ein Neutronenabsorptionselement, umfassend einen Neutronenabsorber aus einer amorphen Legierung, enthaltend wenigstens eines von Eisen, Nickel und einer Eisen-Nickel-Legierung, und eine neutronenabsorbierende Substanz und eine Trägereinrichtung zum Tragen, welche eines oder mehrere der Neutronenabsorberelemente einschliesst, dadurch gekennzeichnet, dass das Neutronenabsorberelement ausgebildet ist aus einer bandartigen Folie und dass die neutronenabsorbierende Substanz umfasst: (a) 0,1 bis 10 %, ausgedrückt als Atomverhältnis, Bor und (b) 0,1 bis 3 %, ausgedrückt als Atomverhältnis von wenigstens einem, ausgewählt aus der Gruppe, bestehend aus Samarium, Gadolinium, Europium, Erbium, Dysprosium, Rhodium, Rhenium, Iridium, Gold und Silber; und dass die amorphe Legierung weiterhin als korrosionsinhibierende Substanz (c) 1 bis 20 %, ausgedrückt als Atomverhältnis, Chrom umfasst, wobei die Gesamtmenge der Atomverhältnisse der Komponenten (a), (b) und (c) nicht mehr als 30 % beträgt.

4. Neutronenabsorptionsanordnung, umfassend ein Neutronenabsorptionselement, umfassend einen Neutronenabsorber aus einer amorphen Legierung, enthaltend wenigstens eines von Eisen, Nickel und einer Eisen-Nickel-Legierung und einer neutronenabsorbierenden Substanz, und einer Trägereinrichtung zum Tragen und einschliessend eines oder mehrere der Neutronenabsorberelemente, dadurch gekennzeichnet, dass das Neutronenabsorberelement als eine bandartige Folie ausgebildet ist und die neutronenabsorbierende Substanz umfasst: (a) 0,1 bis 10 %, ausgedrückt als Atomverhältnis, von Bor, und (b) 0,1 bis 10 %, ausgedrückt als Atomverhältnis, von wenigstens einem, ausgewählt aus der Gruppe, bestehend aus Rhenium, Rhodium, Iridium, Gold und Silber; und dass die amorphe Legierung weiterhin als korrosionsinhibierende Substanz (c) 1 bis 20 %, ausgedrückt als Atomverhältnis, Chrom umfasst, wobei die Gesamtmenge der Atomverhältnisse der Komponenten (a), (b) und (c) nicht mehr als 40 % beträgt.

5. Neutronenabsorptionsanordnung, umfassend: ein Neutronenabsorptionselement, umfassend einen Neutronenabsorber aus einer amorphen Legierung, enthaltend wenigstens eines von Eisen, Nickel und einer Eisen-Nickel-Legierung und einer neutronenabsorbierenden Substanz, und einer Trägereinrichtung zum Tragen und einschliessend eines oder mehrere der Neutronenabsorberelemente, dadurch gekennzeichnet, dass das Neutronenabsorberelement als bandartige Folie ausgebildet ist und die neutronenabsorbierende Substanz Hafnium ist, welches in einer Menge von 8 bis 85 %, ausgedrückt als das Atomverhältnis, vorliegt.

6. Neutronenabsorptionsanordnung, umfassend: ein neutronenabsorbierendes Element, umfassend einen Neutronenabsorber aus einer amorphen Legierung, enthaltend wenigstens eines von Eisen, Nickel und einer Eisen-Nickel-Legierung und einer neutronenabsorbierenden Substanz, und einer Trägereinrichtung zum Tragen, und einschliessend eine oder mehrere der neutronenabsorbierenden Elemente, dadurch

gekennzeichnet, dass das neutronenabsorbierende Element als bandartige Folie ausgebildet ist und die neutronenabsorbierende Substanz wenigstens eines, ausgewählt aus der Gruppe, bestehend aus Samarium, Gadolinium, Europium, Erbium und Dysprosium, welches in einer Menge von 40 bis 70 %, ausgedrückt als Atomverhältnis, vorliegt, ist.

7. Neutronenabsorptionsanordnung gemäss einem der Ansprüche 1 bis 6, dadurch gekennzeichnet, dass das Neutronenabsorptionselement in einer Mehrzahl vorliegt und in der gleichen Ebene mit einer Trägerplatte der Trägereinrichtung angeordnet ist.

8. Neutronenabsorptionsanordnung gemäss Anspruch 7, dadurch gekennzeichnet, dass die Mehrzahl der Neutronenabsorberelemente miteinander überlappend und von der Trägereinrichtung getragen angeordnet ist.

9. Neutronenabsorptionsanordnung gemäss Anspruch 8, dadurch gekennzeichnet, dass die Überlappung der Neutronenabsorptionselemente, die in einer bandförmigen Folie ausgebildet sind, so modifiziert ist, dass zum Teil eine Veränderung der Neutronenabsorptionsdichte in der Neutronenabsorptionsanordnung vorliegt.

10. Neutronenabsorptionsanordnung gemäss einem der Ansprüche 1 bis 6, dadurch gekennzeichnet, dass eine Mehrzahl der Neutronenabsorptionselemente suspendiert und parallel zueinander auf einem Trägerrahmen befestigt ist.

11. Neutronenabsorptionsanordnung gemäss einem der Ansprüche 1 bis 6, dadurch gekennzeichnet, dass das Neutronenabsorptionselement in einem rohrförmigen Halter unter Ausbildung eines Neutronenabsorptionsstabs welcher weiterhin durch die Trägereinrichtung getragen wird, gehalten wird.

12. Neutronenabsorptionsanordnung gemäss Anspruch 11, dadurch gekennzeichnet, dass der Neutronenabsorptionsstab das Neutronenabsorptionselement, welches als bandförmige Folie ausgebildet ist und helikal aufgewickelt ist und an der Peripherie des rohrförmigen Halters befestigt ist, umfasst.

13. Neutronenabsorptionsanordnung gemäss Anspruch 11, dadurch gekennzeichnet, dass der Neutronenabsorptionsstab das Neutronenabsorptionselement, das als ein länglicher dünner Stab ausgebildet ist und das in dem Axialloch des rohrförmigen Halters eingesetzt und befestigt ist, umfasst.

14. Neutronenabsorptionsanordnung gemäss Anspruch 11, dadurch gekennzeichnet, dass der Neutronenabsorptionsstab das Neutronenabsorptionselement, das als Folie ausgebildet ist, welches in dem Axialloch des rohrförmigen Halters befestigt ist, umfasst.

**Revendications**

1. Assemblage absorbant les neutrons comprenant: un élément absorbant les neutrons comprenant un absorbant de neutrons en un alliage amorphe contenant un au moins des métaux suivants: fer, nickel et alliage ferro-nickel, et une substance absorbant les neutrons, et un moyen de support pour soutenir et inclure un ou plusieurs éléments absorbant les neutrons; caractérisé par le fait que ledit élément absorbant les neutrons est constitué d'une feuille en forme de ruban, par le fait que la substance absorbant les neutrons est du bore, présent en une quantité de 5 à 30 % en rapport atomique, et par le fait que ledit alliage amorphe comprend encore de 0,1 à 15 % en rapport atomique d'au moins une substance thermostabilisante choisie dans le groupe comprenant le phosphore, le carbone, le silicium, l'aluminium, l'antimoine, le germanium, l'étain et le beryllium.

2. Assemblage absorbant les neutrons selon la revendication 1, caractérisé par le fait que ladite substance absorbant les neutrons comprend encore (a) 0,1 à 10 % en rapport atomique d'au moins une substance choisie dans le groupe comprenant le samarium, le gadolinium, l'europium, l'erbium, le dysprosium, le rhodium, le rhénium, l'iridium, l'or et l'argent, (b) 0,1 à 5 % en rapport atomique d'au moins une des substances choisies dans le groupe comprenant le lithium, le cadmium, l'indium et le mercure, et (c) 1 à 15 % en rapport atomique d'hafnium; et ledit alliage amorphe comprenant encore à titre de substance inhibant la corrosion (d) 1 à 20 % en rapport atomique de chrome; le total des rapports atomiques des composants (a), (b), (c), (d) et de ladite substance thermostabilisante n'excédant pas 50 %.

3. Assemblage absorbant les neutrons comprenant un élément absorbant les neutrons comprenant un absorbant de neutrons en alliage amorphe contenant au moins une substance parmi le fer, le nickel et un alliage ferro-nickel, et une substance absorbant les neutrons, et un moyen de support pour supporter et inclure un ou plusieurs éléments absorbant les neutrons, caractérisé par le fait que ledit élément absorbant les neutrons est fabriqué en une feuille en forme de ruban, par le fait que ladite substance absorbant les neutrons comprend (a) 0,1 à 10 % en rapport atomique de bore et (b) 0,1 à 3 % en rapport atomique d'au moins une substance choisie dans le groupe comprenant le samarium, le gadolinium, l'europium, l'erbium, le dysprosium, le rhodium, le rhénium, l'iridium, l'or et l'argent, et par le fait que ledit alliage amorphe comprend encore à titre de substance inhibant la corrosion (c) 1 à 20 % en rapport atomique de chrome; le total des rapports atomiques des composants (a), (b) et (c) n'étant pas supérieur à 30 %.

4. Assemblage absorbant les neutrons comprenant un élément absorbant les neutrons comprenant un absorbant de neutrons en un alliage amorphe contenant au moins une substance parmi le fer, le nickel et un alliage ferro-nickel, et une substance absorbant les neutrons, et un moyen de support pour supporter et inclure un ou plusieurs des éléments absorbant les neutrons, caractérisé par le fait que ledit élément absorbant les neutrons est fabriqué sous forme d'un ruban, par le fait que ladite substance absorbant les neutrons comprend (a) 0,1 à 10 % en rapport atomique de bore et (b) 0,1 à 10 % en rapport atomique d'au moins une substance choisie dans le groupe comprenant le rhénium, le rhodium, l'iridium, l'or et l'argent, et par le fait que ledit alliage amorphe comprend encore à titre de substance inhibant la corrosion (c) 1 à 20 % en rapport atomique de chrome; le total des rapports atomiques des composants (a), (b) et (c) n'excédant pas 40 %.

5. Assemblage absorbant les neutrons comprenant un élément absorbant les neutrons comprenant un absorbant de neutrons en un alliage amorphe contenant au moins une substance parmi le fer, le nickel et un alliage ferro-nickel, et une substance absorbant les neutrons, et un moyen de support pour supporter et inclure un ou plusieurs des éléments absorbant les neutrons, caractérisé par le fait que ledit élément absorbant les neutrons est fabriqué en une feuille en forme de ruban, et par le fait que ladite substance absorbant les neutrons est du hafnium présent en une quantité de 8 à 85 % en rapport atomique.

6. Assemblage absorbant les neutrons comprenant un élément absorbant les neutrons comprenant un absorbant de neutrons en un alliage amorphe contenant au moins une substance parmi le fer, le nickel et un alliage ferro-nickel et une substance absorbant les neutrons, et un moyen de support pour supporter et inclure un ou plusieurs des éléments absorbant les neutrons; caractérisé par le fait que ledit élément absorbant les neutrons est fabriqué en une feuille en forme de ruban, et par le fait que ladite substance absorbant les neutrons est au moins une substance choisie dans le groupe comprenant le samarium, le gadolinium, l'europium, l'erbium et le dysprosium, présente en une quantité de 40 à 70 % en rapport atomique.

7. Assemblage absorbant les neutrons selon l'une quelconque des revendications 1 à 6, caractérisé par le fait qu'il comprend plusieurs desdits éléments absorbant les neutrons, disposés dans un même plan avec une plaque-support dudit moyen de support.

8. Assemblage absorbant les neutrons selon la revendication 7, caractérisé par le fait que lesdits plusieurs éléments absorbant les neutrons sont disposés de façon qu'ils se chevauchent les uns les autres, et supportés par lesdits moyens de support.

9. Assemblage absorbant les neutrons selon la revendication 8, caractérisé par le fait que le chevauchement desdits éléments absorbant les neutrons fabriqués en une feuille en forme de ruban est modifié afin de changer partiellement la densité d'absorption des neutrons dans l'assemblage absorbant les neutrons.

10. Assemblage absorbant les neutrons selon l'une quelconque des revendications 1 à 6, caractérisé par le fait que plusieurs éléments absorbant les neutrons sont suspendus et fixés parallèlement entre eux sur un cadre de support.

11. Assemblage absorbant les neutrons selon l'une quelconque des revendications 1 à 6, caractérisé par le fait que ledit élément absorbant les neutrons est maintenu par un support tubulaire pour former une barre absorbant les neutrons, qui est encore supportée par les moyens de support.

12. Assemblage absorbant les neutrons selon la revendication 11, caractérisé par le fait que ladite barre absorbant des neutrons comprend l'élément absorbant les neutrons fabriqué en une feuille en forme de ruban, enroulé en hélice et fixé sur la périphérie du support tubulaire.

13. Assemblage absorbant les neutrons selon la revendication 11, caractérisé par le fait que ladite barre absorbant les neutrons comprend l'élément absorbant les neutrons formé en une barre mince allongée, insérée et fixée dans l'orifice axial du support tubulaire.

14. Assemblage absorbant les neutrons selon la revendication 11, caractérisé par le fait que ladite barre absorbant les neutrons comprend l'élément absorbant les neutrons fabriqué en forme de feuille, introduit dans l'orifice axial du support tubulaire.

# F I G. 1 a

# F I G. 1 b

# FIG.2

# FIG.3 a

# FIG.3 b

# FIG.4a

# FIG.4b

# FIG.4c   FIG.4d

# FIG.5

4

# FIG.6

32 32 32 32 32 32 32 $\underline{36}$

32

$\underline{61}$

60 60 60 60 60 60 60 62

$\underline{61}$ $\underline{61}$ $\underline{61}$ $\underline{61}$ $\underline{61}$ $\underline{61}$ $\underline{61}$

# FIG.7  FIG.8

60

32

$\underline{61}$

80 32

$\underline{61}$

60

# FIG.9